(19) Europäisches Patentamt
European Patent Office
Office européen des brevets

(11) Numéro de publication : **0 499 543 A1**

(12) # DEMANDE DE BREVET EUROPEEN

(21) Numéro de dépôt : **92400386.6**

(51) Int. Cl.$^5$ : **C08G 73/12,** C08F 222/40

(22) Date de dépôt : **13.02.92**

(30) Priorité : **15.02.91 FR 9101834**

(43) Date de publication de la demande : **19.08.92 Bulletin 92/34**

(84) Etats contractants désignés : **AT BE CH DE DK ES GB GR IT LI LU MC NL PT SE**

(71) Demandeur : **RHONE-POULENC CHIMIE**
**25, quai Paul Doumer**
**F-92408 Courbevoie Cédex (FR)**

(72) Inventeur : **Beziers, Daniel**
**19 Allée des Escarrets**
**F-33160 St Medard en Jalles (FR)**
Inventeur : **Camberlin, Yves**
**68Bis, Quai Clémenceau**
**F-69300 Caluire (FR)**
Inventeur : **Chataignier, Evelyne**
**Résidence Les Sources Bat.2**
**F-33160 St Medard en Jalles (FR)**
Inventeur : **Dourthe, Patrice**
**Collège**
**F-40370 Rion des Landes (FR)**

(74) Mandataire : **Mongrédien, André et al**
**c/o SOCIETE DE PROTECTION DES INVENTIONS 25, rue de Ponthieu**
**F-75008 Paris (FR)**

(54) **Prépolymères à groupements imides et leur procédé de préparation, utilisables pour la réalisation de résines durcissables sous rayonnement ionisant.**

(57) Ces prépolymères proviennent de la réaction en milieu liquide homogène, à une température de 50 à 250°C, d'une part, de réactifs générateurs de groupements imides consistant dans au moins deux maléimides particuliers de natures différentes, et d'autre part, de deux réactifs supplémentaires consistant l'un dans un réactif acrylate particulier et l'autre dans un composé vinylique particulier autre qu'un acrylate.

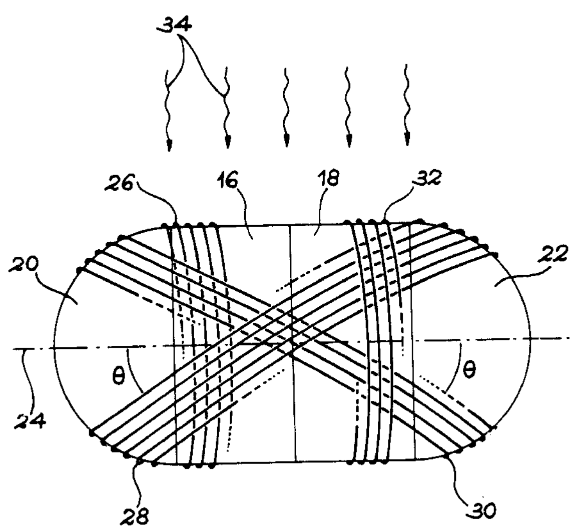


EP 0 499 543 A1

La présente invention se rapporte à des prépolymères à groupements imides, utilisables notamment pour la réalisation de résines et de matériaux composites durcissables sous l'effet d'un rayonnement ionisant ainsi qu'à leur préparation qui fait appel à la mise en oeuvre :

– d'une part : de réactifs générateurs de groupements imides consistant dans au moins deux maléïmides particuliers de natures différentes, et

– d'autre part : de deux réactifs supplémentaires consistant l'un dans un réactif acrylate particulier et l'autre dans un composé vinylique particulier autre qu'un acrylate.

Plus précisément, l'invention a pour objet des prépolymères à groupements imides, présentant une viscosité à l'état fondu, mesurée dans les conditions définies ci-après, comprise entre 0,1 Pa.s et 50 Pa.s, caractérisés en ce qu'ils comprennent le produit de réaction en milieu liquide homogène, à une température allant de 50°C à 250°C, entre les réactifs (a), (b), (c) et (d) suivants :

– (a) est un N,N'-bis-maléimide de formule:

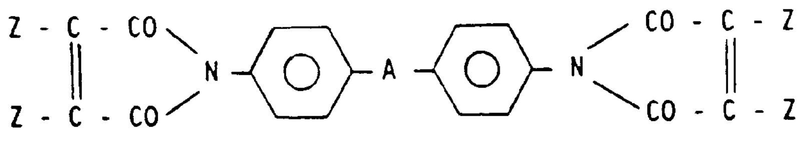 (I)

dans laquelle :

. les symboles Z, identiques ou différents, représentent chacun H, $CH_3$ ou Cl ;

. le symbole A représente un lien valentiel simple ou un groupement :

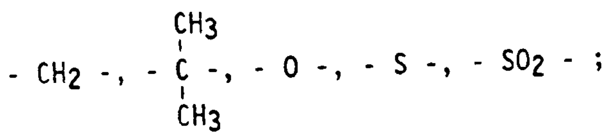

– (b) consiste dans au moins un maléimide choisi parmi les composés de formule :

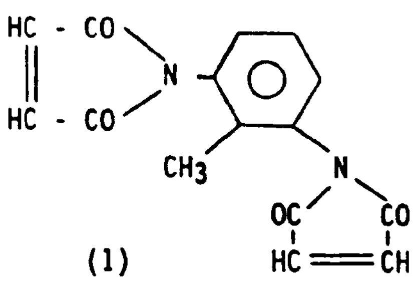
(1)

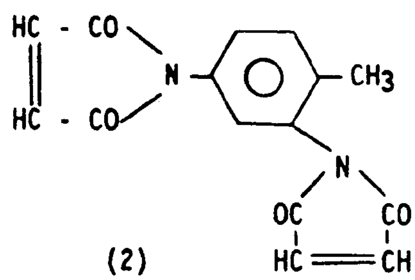
(2)

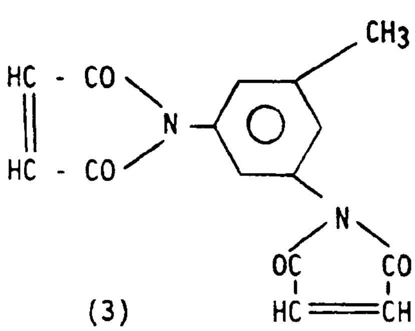
(3)

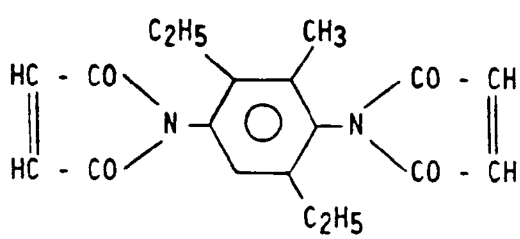
(4)

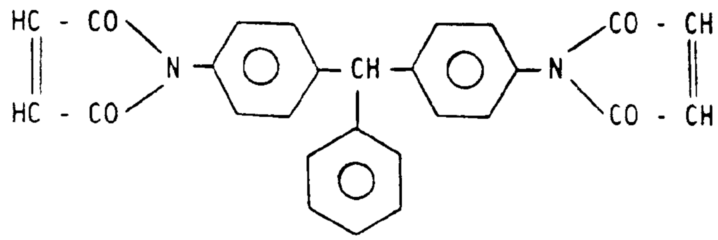

(5)

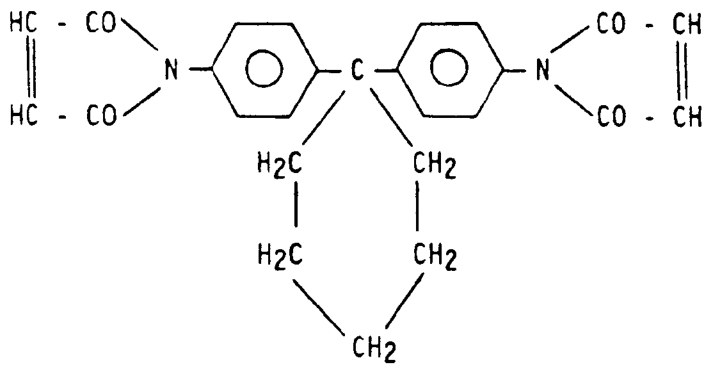

(6)

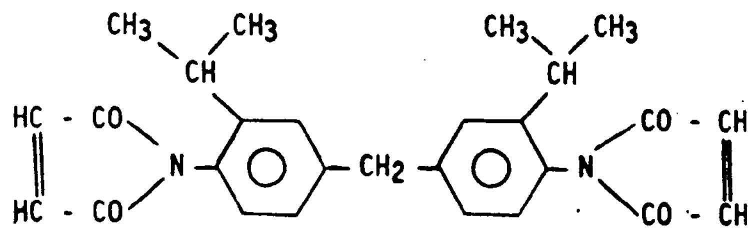

(7)

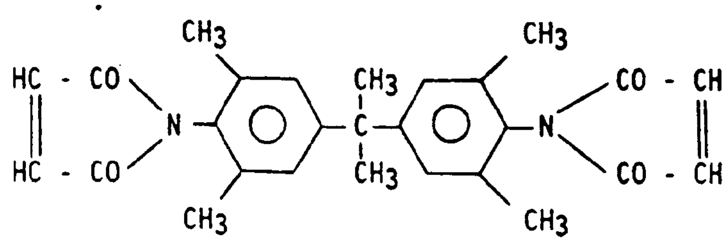

(8)

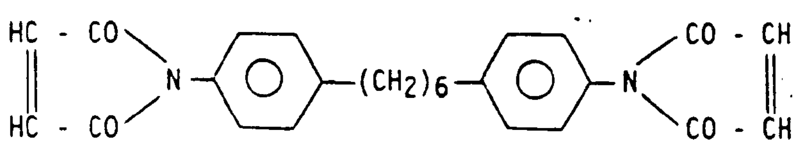

(9)

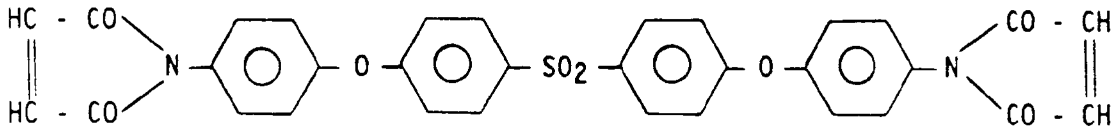

(10)

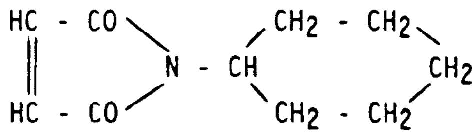

(11) ;

– (c) est un réactif arrylate consistant dans un ou plusieurs composé(s) de formule générale :

$$(CH_2 = CR_1 - CO - O)_n \text{———} G \qquad (II)$$

dans laquelle :

. le symbole $R_1$ représente un atome d'hydrogène ou un radical méthyle ;

. n représente un nombre entier ou fractionnaire au moins égal à 1 et au plus égal à 8 ;

. le symbole G représente un radical organique de valence n dérivé : d'un reste aliphatique saturé, linéaire ou ramifié, ayant de 1 à 30 atomes de carbone et pouvant renfermer un ou plusieurs pont(s) oxygène et/ou une ou plusieurs fonction(s) hydroxyle(s) libre(s) ; d'un reste aromatique (de type arylique ou arylaliphatique) ayant de 6 à 150 atomes de carbone constitué par un noyau benzénique, pouvant être substitué par un à trois radicaux alkyles ayant de 1 à 5 atomes de carbone, ou par plusieurs noyaux benzéniques, éventuellement substitués comme indiqué ci-avant, reliés entre eux par un lien valentiel simple, un groupement inerte ou un radical alkylène ayant de 1 à 3 atomes de carbone, ledit reste aromatique pouvant renfermer à divers endroits de sa structure un ou plusieurs pont(s) oxygène et/ou une ou plusieurs fonction(s) hydroxyle(s) libre(s), le (ou les) valence(s) libre(s) du radical G aromatique pouvant être portée(s) par un atome de carbone d'une chaîne aliphatique et/ou par un atome de carbone d'un noyau benzénique ;

– (d) est un réactif comprenant une double liaison vinylique choisi parmi les vinylpyridines, la N-vinylpyrrolidone-2, le vinyltétrahydrofuranne, le styrène et leurs mélanges.

A titre d'exemples spécifiques de bis-maléimides (a) de formule (I), on peut citer en particulier :

– le N,N'-4,4'-diphénylméthane-bis-maléimide,
– le N,N'-4,4'-diphényléther-bis-maléimide,
– le N,N'-4,4'-diphényl-2,2 propane-bis-maléimide,
– le N,N'-4,4'-diphénylsulfure-bis-maléimide,
– le N,N'-4,4'-diphénylsulfone-bis-maléimide.

Parmi ces bis-maléimides (a), on donne la préférence au N', N'-4,4'-diphénylméthane-bis-maléimide.

Parmi les maléimides (b), on donne la préférence aux composés de formules (1) (ou N,N'-méthyl-2 phénylène-1,3-bis-maléimide), (2) (ou N,N'-méthyl-4 phénylène-1,3-bis-maléimide), et (3) (ou N,N'-méthyl-5 phénylène-1,3-bis-maléimide), et à leurs mélanges.

Les maléimides (a) et (b) sont des produits connus qui peuvent être préparés selon les procédés décrits notamment dans le brevet américain US-A-3 018 290 et le brevet anglais GB-A-1 137 290.

A titre de réactif acrylate (c) qui convient, on peut citer :

* (c1) les mono(méth)acrylates correspondant à la formule (II) dans laquelle :

. n = 1, et

. G représente un radical organique monovalent de formule :

$$-(CH_2\ CH_2O)_m \text{———} G_1 \qquad (III)$$

dans laquelle : $G_1$ représente un radical alkyle, linéaire ou ramifié, ayant de 1 à 6 atomes de carbone ou un radical phényle ; et m est un nombre entier égal à zéro, 1, 2, 3, 4 ou 5 ;

* (c2) les di(méth)acrylates correspondant à la formule (II) dans laquelle :

. n = 2, et

. G représente un radical organique divalent de formule :

$$-(CH_2\ CH_2O)_p - G_2 - (OCH_2\ CH_2)_q- \qquad (IV)$$

dans laquelle : $G_2$ représente un radical divalent alkylène, linéaire ou ramifié, ayant de 2 à 9 atomes de carbone et pouvant renfermer un ou plusieurs pont(s) oxygène ou un radical de formule

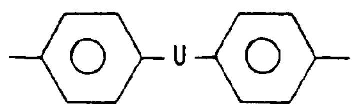

dans laquelle le symbole U représente un lien valentiel simple ou un groupement : $-CH_2-$, $-CH_2-CH_2$, $-CH(CH_3)CH_2-$,

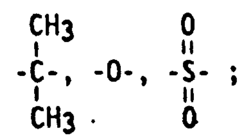

les symboles p et q, identiques ou différents, représentent chacun un nombre entier égal à zéro, 1, 2, 3, 4 ou 5 ;

* (c3) les tri- et tétra(méth)acrylates correspondant à la formule (II) dans laquelle :

. n = 3 ou 4, et

. G représente un radical organique trivalent ou tétravalent dérivé d'un reste aliphatique saturé, linéaire ou ramifié, ayant de 3 à 20 atomes de carbone et pouvant renfermer un ou plusieurs pont(s) oxygène et/ou une ou plusieurs fonction(s) hydroxyle(s) libre(s) ;

* (c4) les (méth)acrylates d'époxy novolaques qui, tout en correspondant à la formule (II), sont représentés ici par la formule suivante :

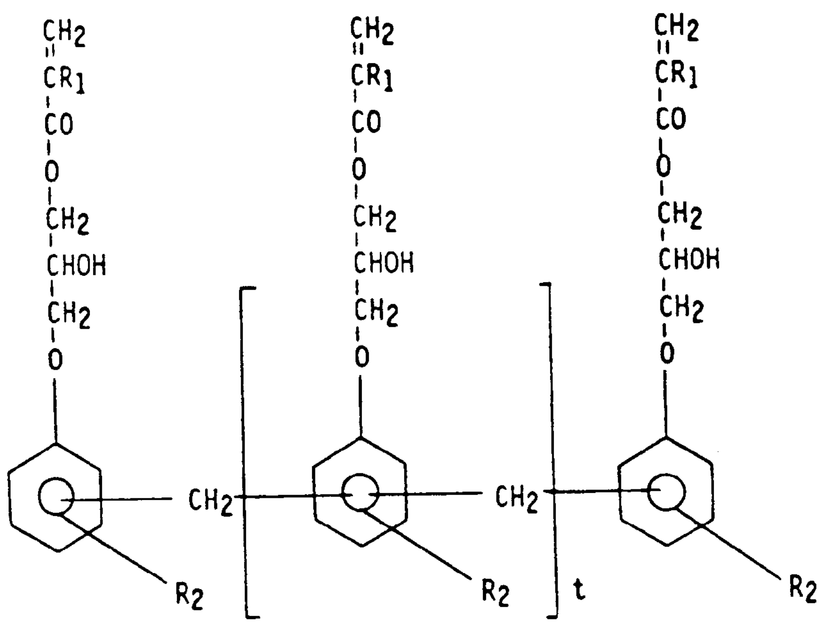

(V)

dans laquelle :

. le symbole $R_1$ a la signification donnée ci-avant à propos de la formule (II) ;

. le symbole $R_2$ représente un atome d'hydrogène ou un radical méthyle ;

. t est un nombre entier ou fractionnaire se situant dans l'intervalle allant de 0,1 à 7 ;

* (c5) des mélanges de plusieurs acrylates et/ou méthacrylates d'un même type [(c1), (c2), (c3) ou (c4)] entre eux ou des mélanges d'un ou plusieurs acrylate(s) et/ou méthacrylate(s) d'un même type avec un ou plusieurs acrylate(s) et/ou méthacrylate(s) d'un autre type.

A titre d'exemples spécifiques de réactif acrylate (c1) qui conviennent bien, on peut citer en particulier : les mono(méth)acrylates de méthyle ; les mono(méth)acrylates de phénol(mono-oxyéthylé) ; les mono(méth) acrylates de phénol (di-oxyéthylé).

A titre d'exemples spécifiques de réactif acrylate (c2) qui conviennent bien, on peut citer : les di(méth)acrylates d'éthylèneglycol ; les di(méth)acrylates de butanediol-1,4 ; les di(méth)acrylates d'hexanediaol-1,6 ; les di(méth)acrylates de tripropylèneglycol ; les di(méth)acrylates des diphénols, di (mono- ou poly-oxyéthylés) ou non, suivants : le dihydroxy-4,4'-diphénylméthane, le bisphénol A, le dihydroxy4,4'-diphényléther et en particulier les di(méth)acrylates de bisphénol A di(mono-oxyéthylé) ou les di(méh)acrylates de bisphénol A di (di-oxyéthylé) [cf. formule (IV) dans laquelle $G_2$ représente le radical :

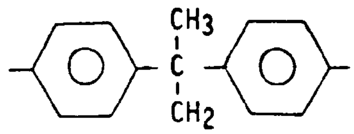

et p = q = 1 ou 2].

A titre d'exemples spécifiques de réactif acrylate (c3) qui conviennent bien, on peut citer en particulier : les tri(méth)acrylates de butanetriol-1,2,4 ; les tri(méth)acrylates d'hexanetriol-1,2,6 ; les tri(méth)acrylates de triméthylolpropane ; les tri(méth)acrylates de pentaérythritol ; les tétra(méth)acrylates de pentaérythritol.

Les (méth)acrylates d'époxy novolaques (c4) sont des produits connus dont certains sont disponibles dans le commerce. Ils peuvent être préparés en faisant réagir les acides (méth)acryliques avec une résine époxy de type novolaque, cette dernière étant le produit de réaction d'épichlorhydrine et de polycondensats phénol/formol [dans la formule (V) donnée ci-avant $R_2$ est alors une atome d'hydrogène] ou de polycondensats crésol/formol [dans la formule, $R_2$ est alors un radical méthyle]. Ces polyacrylates oligomères (c4) et un procédé pour les préparer se trouvent décrits par exemple dans le brevet américain US-A-3.535.403.

A titre d'exemples specifiques de réactif acrylate (c4) qui conviennent bien, on peut citer en particulier les acrylates d'époxy novolaques de formule (V) dans laquelle $R_1$ et $R_2$ représentent un atome d'hydrogène et t est un nombre entier ou fractionnaire se situant dans l'intervalle allant de 0,1 à 5.

A titre d'exemples spécifiques de réactif acrylate (c5) qui conviennent bien, on peut citer :

– les mélanges M1 d'un (méth)acrytate d'époxy novolaque (c4) avec un triacrylate et/ou un triméthacrylate répondant aux définitions données ci-avant à propos du réactif acrylate (c3) et en particulier les mélanges M'1 d'un acrylate d'époxy novolaque convenant bien choisi parmi ceux juste cités ci-avant, avec un triacrylate et/ou un triméthacrylate convenant bien choisi parmi ceux juste cités ci-avant ;

– les mélanges M2 d'un di(méth)acrylate (c2) de bis-phénol A di(mono-oxyéthylé) ou d'un di(méth)acrylate (c2) de bis-phénol A di(di-oxyéthylé) avec un (méth)acrylate d'époxy novolaque (c4) et en particulier les mélanges M'2 d'un di(méth)acrylate (c2) de bis-phénol A di(mono-oxyéthylé) ou d'un di(méth)acrylate (c2) de bis-phénol A di(di-oxyéthylé) avec un acrylate d'époxy novolaque convenant bien choisi parmi ceux juste cités ci-avant ;

– les mélanges M3 ou M'3 d'un di(méth)acrylate (c2) de bis-phénol A di(mono-oxyéthylé) ou d'un di-(méth)acrylate (c2) de bis-phénol A di(di-oxyéthylé) avec un mélange M1 (mélange global dit M3) ou avec un mélange M'1 (mélange global dit M'3).

Le réactif acrylate (c) qui est utilisé de manière préférentielle est constitué par les mélanges :

* mélanges M'2 :

  – d'un di(méth)acrylate (c2) de bis-phénol A di(mono-ocyéthylé) ou d'un di(méth)acrylate (c2) de bis-phénol A di(di-oxyéthylé),

  – avec un acrylate d'époxy novolaque de formule (V) dans laquelle $R_1$ et $R_2$ représentent un atome d'hydrogène et t est un nombre entier ou fractionnaire se situant dans l'intervalle allant de 0,1 à 5 ;

* mélanges M'3 :

  – d'un di(méth)acrylate (c2) de bis-phénol A di(mono-oxyéthylé) ou d'un di(méth)acrylate (c2) de bis-phénol A di(di-oxyéthylé),

  – avec un mélange M'1 formé d'un acrylate d'époxy novolaque de formule (V) dans laquelle $R_1$ et $R_2$ représentent un atome d'hydrogène et t est un nombre entier ou fractionnaire se situant dans l'intervalle allant de 0,1 à 5, avec un triacrylate et/ou un triméthacrylate choisi parmi les tri(méth)acrylates de butanetriol-1,2,4, les tri(méth)acrylates d'hexanetriol-1,2,6, les tri(méth)acrylates de triméthylolpropane et

les tri(méth)acrylates de pentaérythritol.

Le réactif acrylate (c) qui est utilisé de manière très préférentielle est constitué par les mélanges M″3 :

– d'un di(méth)acrylate (c2) de bis-phénol A di(mono-oxyéthylé) ou d'un di(méth)acrylate (c2) de bis-phénol A di(di-oxyéthylé),

– avec un mélange M″1 formé d'un acrylate d'époxy novolaque de formule (V) dans laquelle $R_1$ et $R_2$ représentent un atome d'hydrogène et t est un nombre entier ou fractionnaire se situant dans l'intervalle allant de 0,1 à 5, avec le triacrylate de triméthylolpropane.

Dans les mélange M2, M'2, M3, M'3 ou M″3 d'acrylates précités, les proportions des constituants peuvent varier dans de larges limites ; de préférence, les proportions des constituants sont choisies de manière à ce que le rapport :

$$\frac{\text{poids de (méth)acrylate (c4) pris seul ou en mélange avec le (méth)acrylate (c3)}}{\text{poids de di(méth)acrylate (c2)}}$$

varie entre 0,2 et 5. Plus préférentiellement encore, la valeur de ce rapport varie entre 1 et 3.

En ce qui concerne les proportions de (méth)acrylate (c3) dans les mélanges pouvant en contenir (M1, M'1, M″1), elles représentent au plus 30 % en poids, et de préférence au plus 25 % en poids, exprimées par rapport au poids du mélange de (méth)acrylates (c3) + (c4).

Parmi les composes utilisables comme réactif (d) comprenant une double liaison vinylique, on donne l'a préférence à la N-vinylpyrrolldone-2.

Dans les prépolymères à groupements imides qui viennent d'être définis, on choisit les quantités de réactifs maleimides (a) et (b) de manière à avoir, en poids par rapport à l'ensemble (a) + (b) :

– de 50 à 90 % et, de préférence, de 60 à 80 % de bis-maléimide (a) de formule (I), et

– de 50 à 10 % et, de préférence, de 40 à 20 % de maléimide(s) (b) de formules (1) à (11).

S'agissant du réactif supplémentaire acrylate (c), formé d'un ou plusieurs composé(s) de formule (II), on l'utilise en quantité représentant de 5 à 50 % et, de préférence, de 10 à 30 % du poids de l'ensemble des réactifs (a) + (b) + (c) + (d).

S'agissant du réactif supplémentaire (d), formé d'un ou plusieurs composé(s) à double liaison vinylique, on l'utilise en quantité représentant de 0,1 à 10 % et, de préférence, de 2 à 8 % du poids de l'ensemble des réactifs (a) + (b) + (c) + (d).

Les prépolymères à groupements imides selon l'invention peuvent être préparés à l'état fondu, en masse, selon le mode opératoire avantageux décrit ci -après.

On réalise tout d'abord un mélange intime du bis-maléimide (a) avec le(ou les) maléimide(s) (b), en opérant sous agitation et à une température au plus égale à la température de fusion du maléimide le plus difficile à liquéfier et généralement comprise entre 50°C et 250°C et de préférence entre 80°C et 180°C, jusqu'à l'obtention d'un milieu liquide homogène (étape 1).

Puis on ajoute le réactif (d) dans le mélange fondu qui est agité et maintenu à une température identique ou différente de celle mise en oeuvre dans l'étape précédente, comprise également entre 50°C et 250°C et, de préférence, entre 80°C et 180°C, et on a soin de laisser ensuite le milieu réactionnel réagir sous agitation pendant une durée allant par exemple de 2 minutes 15 minutes avant de procéder à l'introduction du réactif acrylate (c) restant à mettre en oeuvre (étape 2).

Enfin, on ajoute le réactif acrylate (c), puis on laisse à nouveau le milieu réactionnel réagir sous agitation pendant une durée allant par exemple de 2 minutes 15 minutes, et on coule ensuite immédiatement le prépolymère formé à l'extérieur du réacteur ayant servi à le préparer (étape 3).

La viscosité à l'état fondu des prépolymères ainsi obtenus peut être aisément ajustée à la valeur souhattée, comprise entre 0,1 Pa.s et 50 Pa.s, en jouant notamment sur la nature et les proportions respectives des réactifs mis en oeuvre ainsi que sur la température et la durée des différentes étapes du procédé de fabrication dont on vient de parler.

Les opérations qui viennent d'être décrites peuvent être effectuées non seulement en masse fondue, mais encore en présence de quantités variables d'un liquide polaire tel que par exemple : crésol, diméthylformamide, N-méthylpyrrolidone, diméthylacétamide, méthyléthylcétone, dioxanne, cyclohexanone.

Sans vouloir être lié par les explications qui suivent, on pense que le ou les maléïmides (b) servent à abaisser le point de fusion du bis-maléïmide (a) par formation d'un eutectique ; que le réactif (d) sert à avancer la réaction entre les maléïmides (a) et (b) de manière à éviter une recristallisation et que l'acrylate (c) sert à abaisser la viscosité des prépolymères.

A l'état de liquide homogène, les prépolymères selon l'invention peuvent être utilisés directement par exemple pour l'imprégnation de conducteurs ou pour faire des moulages par simple coulée à chaud. On peut aussi, après refroidissement et broyage, employer ces prépolymères à l'état de poudres par exemple pour l'obtention d'objets moulés par compression, éventuellement en association avec des charges fibreuses ou pulvérulentes. Les prépolymères peuvent également être utilisés en solution pour la préparation de revêtements,

de collages, de matériaux stratifiés dont le squelette peut être sous forme de nappes tissées ou non tissées, d'éléments unidirectionnels ou de fibres coupées naturelles ou synthétiques tels que par exemple les filaments ou fibres de verre, de bore, de carbone, de tungstène, de silicium, de polyamide-imide ou de polyamide aromatique.

Mais les prépolymères selon la présente invention présentent essentiellement un intérêt tout particulier pour la réalisation de résines durcissables sous l'effet d'un rayonnement ionisant entrant dans la fabrication de matériaux composites à renfort fibreux.

Ces résines durcissables sous rayonnement ionisant comprennent un prépolymère A à groupements imides tel que défini ci-dessus et au moins un diluant réactif B consistant en un monomère à terminaison vinylique copolymérisable avec ledit prépolymère A lorsqu'on soumet un mélange du prépolymère A et du diluant B à un rayonnement ionisant, la quantité totale de diluant B étant telle que les fonctions maléïmides du prépolymère A sont toutes consommées après l'action du rayonnement ionisant.

On entend par "rayonnement ionisant" un rayonnement X, gamma, bêta, visible ou ultraviolet et par "durcissement" une polymérisation et/ou une réticulation.

Le ou les diluants réactifs B permettent, après irradiation, l'obtention de degrés de réticulation du bis-maléïmide supérieurs à 95%.

De façon générale le ou les diluants réactifs B comportent chacun une channe carbonée principale de 1 à 20 atomes de carbone et de préférence de 1 à 10 atomes de carbone.

Comme diluant réactif B on peut utiliser des monomères acrylates du type triméthylol propane triacrylate (TMPTA) de formule :

$$CH_3\text{-}CH_2\text{-}C\text{-}(CH_2\text{-}O\text{-}CO\text{-}CH{=}CH_2)_3,$$

le triméthylol propane triméthacrylate (TMPTM) de formule :

$$CH_3\text{-}CH_2\text{-}C\text{-}(CH_2\text{-}O\text{-}CO\text{-}CCH_3{=}CH_2)_3,$$

le triallylcyanurate de formule :

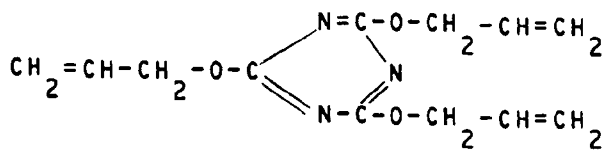

On peut aussi utiliser du styrène et des alkylstyrènes dont les radicaux alkyles comportent chacun de 1 à 5 atomes de carbone, tels que le 2-méthylstyrène, le 3,4-méthylstyrène ou encore le divinylbenzène (DVB). On peut aussi utiliser la N-vinylpyrrolidone-2 (NVP), le butylvinyléther (BVE), les vinylanisoles tels que le 4-vinylanisole, et les vinylpyridines telles que la 4-vinylpyridine, etc.

Ces diluants réactifs B peuvent être utilisés seuls ou combinés selon les conditions de mise en oeuvre recherchées et en particulier selon la viscosité recherchée.

Le réactif (d) et le diluant B peuvent être identiques ou différents.

Le choix du ou des diluants réactifs B dépend essentiellement de l'application envisagée ainsi que de la durée de vie de la résine en pot (pot life en terminologie anglo-saxonne), recherchée pour sa mise en oeuvre.

La durée de vie en pot est le temps pendant lequel la viscosité recherchée pour la mise en oeuvre de la résine ne bouge pas ou pratiquement pas. Par exemple pour l'imprégnation d'un tissu, la viscosité de la résine pendant l'imprégnation doit rester dans la gamme de 0,5 à 1 Pa.s.

Selon l'application envisagée, le temps pendant lequel la viscosité de la résine doit rester pratiquement constante est compris entre 1 et 20 heures.

Des formulations durcissables sous rayonnement ou bombardement électronique à base de DVB ou de styrène sont beaucoup plus réactives que les autres formulations mais leur durée de vie est courte et nécessite une mise en oeuvre rapide. En revanche, leur température de transition vitreuse est très élevée.

La NVP présente le meilleur compromis entre l'exigence de mise en oeuvre et la durée de vie en pot de la résine d'une part et de la température de transition vitreuse d'autre part.

Une résine ne contenant qu'un prépolymère A selon l'invention ne présente pas de propriété thermique suffisante, après irradiation sous rayonnement ionisant, puisque sa température de transition vitreuse est inférieure à 100°C. En mélangeant ce prépolymère A avec un ou des diluants réactifs B, les températures de transitions vitreuses de ces mêmes résines peuvent évoluer de 250 à 360°C, après irradiation.

La quantité optimisée de diluant réactif B est déterminée par analyse physicochimique et est obtenue quand, après irradiation, les fonctions maléïmides du prépolymère sont complètement consommées et qu'il n'y a pas de fonction vinylique en excès. Aussi, pour obtenir un taux de réticulation élevé du prépolymère, la quantité de diluant est choisie dans la gamme de 10 à 50 parties en poids et avantageusement dans la gamme de

20 à 40 parties en poids et mieux encore de 30 à 40 parties en poids, pour 100 parties en poids de prépolymère A.

Le durcissement des résines sous rayonnement ionisant est obtenu en mélangeant le prépolymère A (a+b+c+d) et le diluant réactif B avant l'utilisation ou la mise en oeuvre des résines puis en soumettant le mélange obtenu à un rayonnement ionisant.

Ces résines sont destinées à la fabrication de matériaux composites notamment à renfort fibreux selon différents procédés connus tels que la coulée, le bobinage filamentaire, le drapage uni- ou multidirectionnel, la pré-imprégnation, l'injection, etc.

Un matériau composite à renfort fibreux est obtenu en imprégnant le renfort fibreux d'une résine telle que décrite ci-dessus, puis en soumettant l'ensemble à un rayonnement ionisant.

Le renfort fibreux peut consister en des fils tissés, tressés ou bobinés tels que cités précédemment.

L'action d'un rayonnement ionisant sur une résine seule permet une conversion de 98% au moins des fonctions maléïmides du prépolymère A.

En revanche, le taux de conversion de ces fonctions est de l'ordre de 84 à 88% pour un matériau composite. Aussi, pour obtenir une optimisation des propriétés mécaniques, une post-cuisson du matériau à une température par exemple de 180°C à 300°C, sous pression atmosphérique, pendant 30 minutes à 8 heures peut être envisagée. Pratiquement, on effectue la post-cuisson à une température de 180°C à 250°C pendant 2 à 8 heures.

Les doses d'irradiation de la résine sont importantes et se situent dans la gamme de 100 à 350 kGy et de préférence de 250 à 350 kGy.

Ces doses d'irradiation sont obtenues en faisant passer sous un accélérateur de particules chaque mélange prépolymère-diluant à une certaine vitesse. Cette vitesse est fonction de la dose et des caractéristiques de l'accélérateur ; soit D=K/V où D est la dose d'irradiation exprimée en kGy, K est un paramètre dépendant des caractéristiques (énergie et puissance) ainsi que des réglages de l'accélérateur (fréquence de balayage, largeur de balayage, fréquence d'impulsion) et V représente la vitesse de défilement du mélange.

Pour un accélérateur d'électrons de 10MeV et d'une puissance de 10kW, on obtient 10kGy=2m/min.

Etant donné que des doses aussi importantes se feraient à des vitesses trop lentes (6 à 7 cm/min), vitesse souvent difficile à obtenir avec un moyen industriel, on utilise avantageusement une distribution des doses par passages successifs du mélange sous l'accélérateur. Le meilleur compromis se fait par passage unitaire de 50kGy, ce qui correspond à une vitesse de 40cm/min.

D'autres caractéristiques et avantages de l'invention ressortiront mieux de la description qui va suivre donnée à titre illustratif et non limitatif, en référence à l'unique figure illustrant la fabrication d'un matériau composite par bobinage filamentaire.

L'exemple qui suit illustre comment l'invention peut être mise en pratique.

EXEMPLE :

Etape 1 : dans un réacteur en verre de 350 cm³, muni d'un agitateur de type ancre en acier inoxydable et préchauffé par introduction dudit réacteur dans un bain d'huile porté à 165°C, on introduit en 12 minutes et sous agitation un mélange de :

– 162,33 g de N,N′-4,4′-diphénylméthane-bis-maléimide, et
– 69,56 g de N,N′-méthyl-4 phénylène-1,3-bis-maléimide.

On continue à agiter le mélange jusqu'à fusion complète des ingrédients engagés et obtention d'une masse liquide homogène ; la durée de cette agitation supplémentaire est de 5 minutes.

Etape 2 : on ajoute ensuite dans la masse liquide homogène 17,82 g de N-vinylpyrrolidone-2, puis on laisse réagir l'ensemble sous agitation pendant 5 minutes.

Etape 3 : on sort le réacteur du bain d'huile chauffé, et on ajoute alors dans la masse réactionnelle toujours sous agitation un mélange de :

– 26,76 g de diacrylate de bis-phénol A di(di-oxyéthylé), ce composé étant celui disponible dans le commerce sous la marque déposée EBECRYL 150 de la Société UCB, et
– 53,53 g de composé acrylate consistant dans le mélange à base de 80 % en poids d'un diacrylate d'époxy novolaque de formule (V), dans laquelle $R_1 = R_2 = H$ et t est un nombre égal à environ 3, et de 20 % en poids de triacrylate de triméthylolpropane, ce composé étant celui disponible dans lecommerce sous la marque déposée EBECRYL 629 de lu Société UCB.

Après introduction des composés acrylate, on laisse réagir l'ensemble sous agitation pendant 3 minutes, puis on coule la masse réactionnelle obtenue dans un récipient métallique. Après refroidissement jusqu'à la température ambiante, on obtient le prépolymère souhaité à l'état solide. Sa viscosité à 80°C est de 5,5 Pa.s ; cette viscosité monte à 6,9 Pa.s après un maintien de une heure à 80°C.

La viscosité à l'état fondu dont on parle dans le présent memoire est la viscosité dynamique du prépolymère obtenu au moment de la coulée en fin du procédé de préparation conduit en masse ; elle est mesurée à 80°C +/- 0,1°C avec un viscosimètre RHEOMAT 30 de lu Société CONTRAVES équipé d'un mobile tournant sous un gradiant de 13 $s^{-1}$ ; sa valeur est donnée en Pa.s.

Le prépolymère obtenu est alors prêt à l'emploi pour la fabrication d'un matériau composite à renfort fibreux. A titre illustratif, on décrit ci-après, la fabrication de deux viroles inter-étage de propulseurs de fusée, par bobinage filamentaire.

Juste avant le bobinage, on fond à 80°c sous agitation environ 100 parties en poids du prépolymère A et on chauffe à 40°C 40 parties en poids de N-vinylpyrrolidone-2 comme diluant réactif B. On ajoute le diluant réactif B dans le prépolymère fondu sous agitation lente puis on refroidit l'ensemble à une température d'utilisation de 35°C. On imprègne alors une mèche de carbone de 3000 à 12000 filaments par la résine obtenue. L'imprégnation se fait en faisant défiler en continu, au rouleau, la mèche dans le bain de résine, à une vitesse variable en fonction de la trajectoire de dépose, de façon connue.

Cette mèche est bobinée sur la structure monobloc représentée sur la figure constituée de deux viroles homothétiques 16 et 18 prises en sandwich entre deux satellites 20 et 22 hémisphériques identiques. L'ensemble de la structure présente un axe de révolution 24.

Les deux viroles sont destinées à travailler essentiellement en compression et sont donc fabriquées selon quatre enroulements successifs : un enroulement interne 26 selon la circonférence des viroles, deux enroulements longitudinaux 28 et 30 formant chacun un angle $\theta$ de 30° par rapport à l'axe 24 et enfin un enroulement 32 externe selon la circonférence.

La température d'imprégnation de la mèche de carbone est de 35°C et la viscosité de la résine est de 0,5.10 Pa.s. La durée de vie en pot de la résine est supérieure à 12h. Le taux d'imprégnation est de 30% en poids.

Le bobinage est réalisé avec la même facilité que pour un fil de carbone imprégné d'une résine époxy à terminaison acrylique.

Le durcissement du matériau composite est fait à 300kGy par passage de 50kGy à une vitesse de 20cm/min en rotation selon l'axe 24, le temps total d'irradiation est de 2h.

Après polymérisation sous bombardement électronique, la structure est tronçonnée pour récupérer les deux viroles 16 et 18.

On effectue alors la post-cuisson des viroles à 180°C pendant 8h. La stabilité dimensionnelle, avant et après post-cuisson, est bonne.

## Revendications

**1/** Prépolymères à groupements imides utilisables notamment pour la réalisation de résines durcissables sous l'effet d'un rayonnement ionisant, présentant une viscosité à l'état fondu, comprise entre 0,1 Pa.s et 50 Pa.s, caractérisés en ce qu'ils comprennent le produit de réaction en milieu liquide homogène, à une température allant de 50°C à 250°C, entre les réactifs (a), (b), (c) et (d) suivants :

– (a) est un N,N'-bis-maléimide de formule :

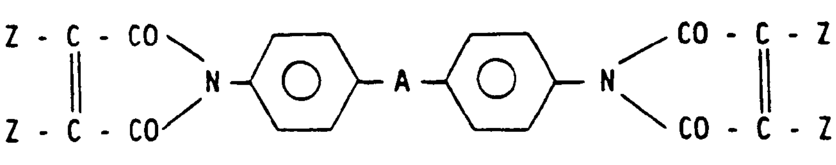

(I)

dans laquelle :

. les symboles Z, identiques ou différents, représentent chacun H, $CH_3$ ou Cl ;

. le symbole A représente un lien valentiel simple ou un groupement :

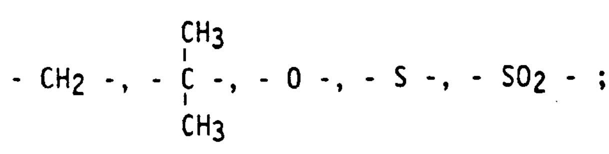

– (b) consiste dans au moins un maléimide choisi parmi les composés de formule :

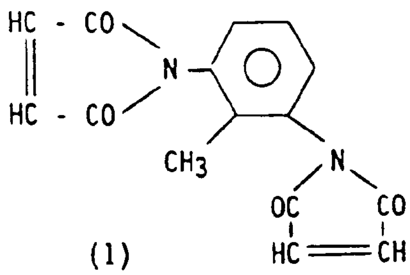

(1)

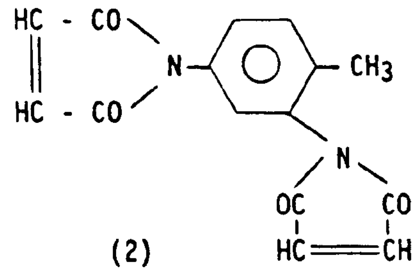

(2)

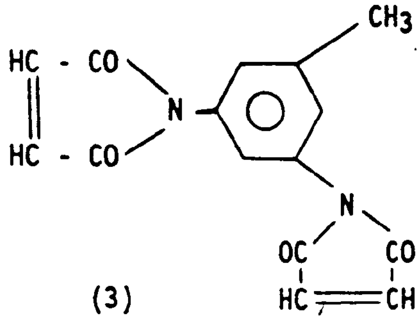

(3)

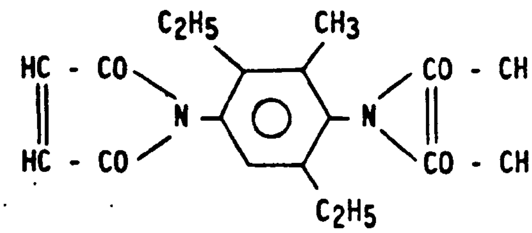

(4)

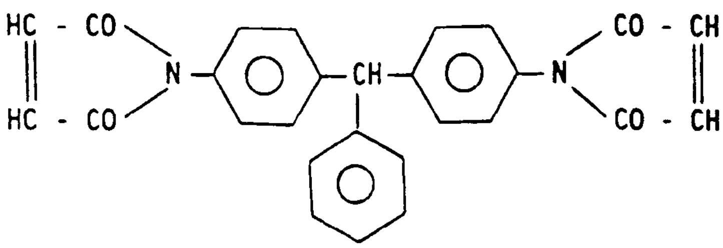

(5)

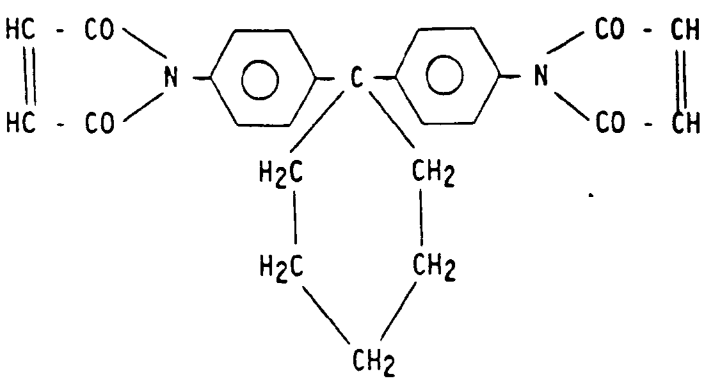

(6)

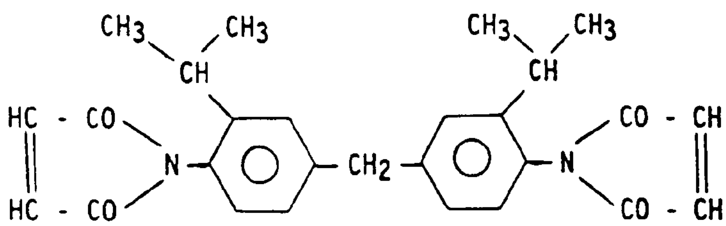

(7)

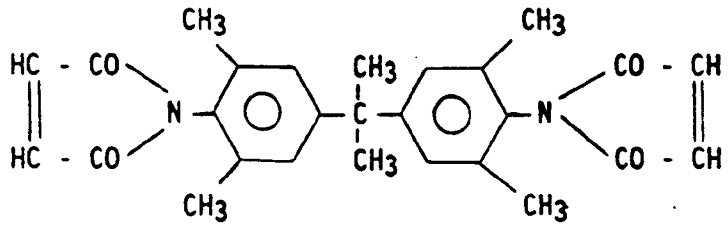
(8)

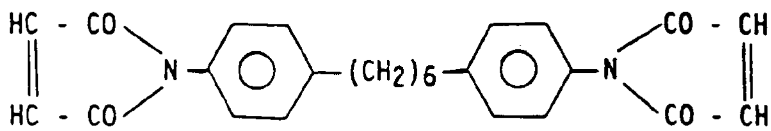
(9)

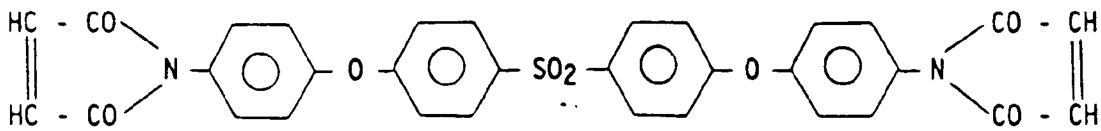

(10)

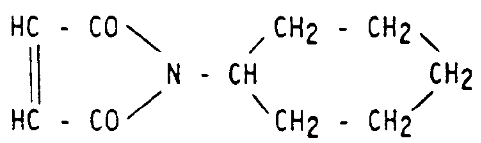
(11) ;

– (c) est un réactif acrylate consistant dans un ou plusieurs composé(s) de formule générale :

$$(CH_2 = CR_1 - CO - O)_n\text{—}G \qquad (II)$$

dans laquelle :

. le symbole $R_1$ représente un atome d'hydrogène ou un radical méthyle ;

. n représente un nombre entier ou fractionnaire au moins égal à 1 et au plus égal à 8 ;

. le symbole G représente un radical organique de valence n dérivé : d'un reste aliphatique saturé, linéaire ou ramifie, ayant de 1 à 30 atomes de carbone et pouvant renfermer un ou plusieurs pont(s) oxygène et/ou une ou plusieurs fonction(s) hydroxyle(s) libre(s) ; d'un reste aromatique (de type arylique ou arylaliphatique) ayant de 6 à 150 atomes de carbone constitué par un noyau benzénique; pouvant être substitue par un à trois radicaux alkyles ayant de 1 à 5 atomes de carbone, ou par plusieurs noyaux benzeniques, éventuellement substitués comme indiqué ci-avant, reliés entre eux par un lien valentiel simple, un groupement inerte ou un radical alkylène ayant de 1 à 3 atomes de carbone, ledit reste aromatique pouvant renfermer à divers endroits de sa stucture un ou plusieurs pont(s) oxygène et/ou une ou plusieurs fonction(s) hydroxyle(s) libre(s), le (ou les) valence(s) libre(s) du radical G aromatique pouvant être portée(s) par un atome de carbone d'une chaîne aliphatique et/ou par un atome de carbone d'un noyau benzénique ;

– (d) est un réactif comprenant une double liaison vinylique choisi parmi les vinylpyridines, la N-vinylpyrrolidone-2, le vinyltétrahydrofuranne, le styrène et leurs mélanges.

**2/** Prépolymères selon la revendication 1, caractérisés en ce que le réactif (a) est pris dans le groupe forme par :

– le N,N'-4,4'-diphénylméthane-bis-maleimide,

– le N,N'-4,4'-diphenyléther-bis-maléimide,

– le N,N'-4,4'-diphenyl-2,2 propane-bis-maléimide,

– le N,N'-4,4'-diphenylsulfure-bis-maléimide,

– le N,N'-4,4'-diphénylsulfone-bis-maléimide.

**3/** Prépolymères selon l'une des revendications 1 et 2, caractérisés en ce que le réactif (b) est pris dans le groupe formé par les composes de formules (1) (ou N,N'-méthyl-2 phénylène-1,3-bis-maleimide), (2) (ou N,N'-méthyl-4 phénylène-1,3-bis-maléimide), et (3) (ou N,N'-méthyl-5 phénylène-1,3-bis-maléimide), et leurs

mélanges.

**4/** Prépolymères selon l'une quelconque des revendications 1 à 3, caractérisés en ce que le réactif acrylate (c) consiste dans un ou plusieurs composé(s) appartenant aux types (c1), (c2), (c3), (c4) et (c5) suivants :

* (c1) les mono(méth)acrylates correspondant à la formule (II) dans laquelle :

. n = 1, et

. G représente un radical organique monovalent de formule :

$$-(CH_2\ CH_2O)_m - G_1 \qquad (III)$$

dans laquelle : $G_1$ représente un radical alkyle, linéaire ou ramifié, ayant de 1 à 6 atomes de carbone ou un radical phényle ; et m est un nombre entier égal à zéro, 1, 2, 3, 4 ou 5 ;

* (c2) les di(méth)acrylates correspondant à la formule (II) dans laquelle :

. n = 2, et

. G représente un radical organique divalent de formule :

$$-(CH_2\ CH_2O)_p - G_2 - (OCH_2\ CH_2)_q - \qquad (IV)$$

dans laquelle : $G_2$ représente un radical divalent alkylène, lineaire ou ramifié, ayant de 2 à 9 atomes de carbone et pouvant renfermer un ou plusieurs pont(s) oxygène ou un radical de formule

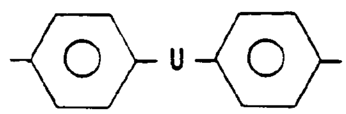

dans laquelle le symbole U représente un lien valentiel simple ou un groupement : $-CH_2-$, $-CH_2-CH_2$, -CH $(CH_3)CH_2-$,

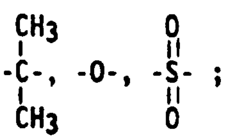

les symboles p et q, identiques ou différents, représentent chacun un nombre entier égal à zéro, 1, 2, 3, 4 ou 5.

* (c3) les tri- et tétra(méth)acrylates correspondant à la formule (II) dans laquelle :

. n = 3 ou 4, et

. G représente un radical organique trivalent ou tétravalent dérivé d'un reste aliphatique saturé, linéaire ou ramifié, ayant de 3 à 20 atomes de carbone et pouvant renfermer un ou plusieurs pont(s) oxygène et/ou une ou plusieurs fonction(s) hydroxyle(s) libre(s) ;

* (c4) les (méth)acrylates d'époxy novolaques qui, tout en correspondant à la formule (II), sont représentés ici par la formule suivante :

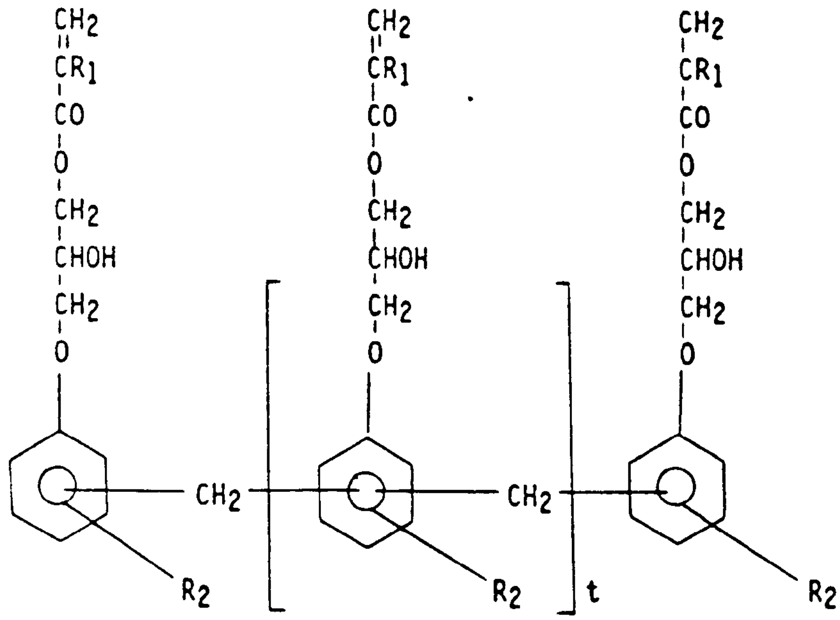

(V)

dans laquelle :

. le symbole $R_1$ a la signification donnée ci-avant à propos de la formule (II) ;

. le symbole $R_2$ représente un atome d'hydrogène ou un radical méthyle ;

. t est un nombre entier ou fractionnaire se situant dans l'intervalle allant de 0,1 à 7 ;

* (c5) des mélanges de plusieurs acrylates et/ou méthacrylates d'un même type [(c1), (c2), (c3) ou (c4)] entre eux ou des mélanges d'un ou plusieurs Acrylate(s) et/ou méthacrylate(s) d'un même type avec un ou plusieurs acrylate(s) et/ou méthacrylate(s) d'un autre type.

**5/** Prépolymères selon la revendication 4, caractérisés en ce que le réactif acrylate (c) consiste dans les mélanges :

* mélanges M'2 :

– d'un di(méth)acrylate (c2) de bis-phénol A di(mono-oxyéthylé) ou d'un di(méth)acrylate (c2) de bis-phénol A di(di-oxyéthylé),

– avec un acrylate d'époxy novolaque de formule (V) dans laquelle $R_1$ et $R_2$ représentent un atome d'hydrogène et t est un nombre entier ou fractionnaire se situant dans l'intervalle allant de 0,1 à 5 ;

* melanges M'3 :

– d'un di(méth)acrylate (c2) de bis-phénol A di(mono-oxyethylé) ou d'un di(méth)acrylate (c2) de bis-phénol A di(di-oxyéthylé),

– avec un mélange M'1 formé d'un acrylate d'époxy novolaque de formule (V) dans laquelle $R_1$ et $R_2$ représentent un atome d'hydrogène et t est un nombre entier ou fractionnaire se situant dans l'intervalle allant de 0,1 à 5, avec un triacrylate et/ou un triméthacrylate choisi parmi les tri(méth)acrylates de butanetriol-1,2,4, les tri(méth)acrylates d'hexanetriol-1,2,6, les tri(méth)acrylates de triméthylolpropane et les tri(méth)acrylates de pentaerythritol.

**6/** Prépolymères selon l'une quelconque des revendications 1 à 5, caractérisés en ce que l'on choisit les quantités de réactifs maléimides (a) et (b) de manière à avoir, en poids par rapport à l'ensemble (a) + (b) :

– de 50 à 90 % de bis-maléimide (a) de formule (I), et

– de 50 à 10 % de maléimide(s) (b) de formules (1) à (11).

**7/** Prépolymères selon l'une quelconque des revendications 1 à 6, caractérisés en ce que le réactif acrylate (c), formé d'un ou plusieurs composé(s) de formule (II) est utilisé en quantité représentant de 5 à 50 % du poids de l'ensemble des réactifs (a) + (b) + (c) + (d).

**8/** Prépolymères selon l'une quelconque des revendications 1 à 7, caractérisés en ce que le réactif (d), formé d'un ou plusieurs composé(s) à double liaison vinylique est utilise en quantité représentant de 0,1 à 10 % du poids de l'ensemble des réactifs (a) + (b) + (c) + (d).

**9/** Procédé de préparation des prépolymères selon l'une quelconque des revendications 1 à 8, caractérisé en ce que l'on enchaîne les étapes suivantes :

. étape 1 : on fait fondre le mélange (a) + (b) en opérant sous agitation et à une température comprise entre 50°C et 250°C jusqu'a l'obtention d'un milieu liquide homogène ;

. puis, étape 2 : on ajoute le réactif (d) dans le mélange fondu qui est agité et maintenu à une température

identique ou différente de celle mise en oeuvre dans l'étape précédente, comprise également entre 50°C et 250°C, et on a soin de laisser ensuite le milieu réactionnel réagir sous agitation pendant une durée allant de 2 minutes à 15 minutes avant de procéder à l'introduction du réactif acrylate (c) restant à mettre en oeuvre (étape 2) ;

. et enfin, étape 3 : on ajoute le réactif acrylate (c), puis on laisse à nouveau le milieu réactionnel réagir sous agitation pendant une durée allant de 2 minutes à 15 minutes,,et on coule ensuite immédiatement le prépolymère formé à l'extérieur du réacteur ayant servi à le préparer.

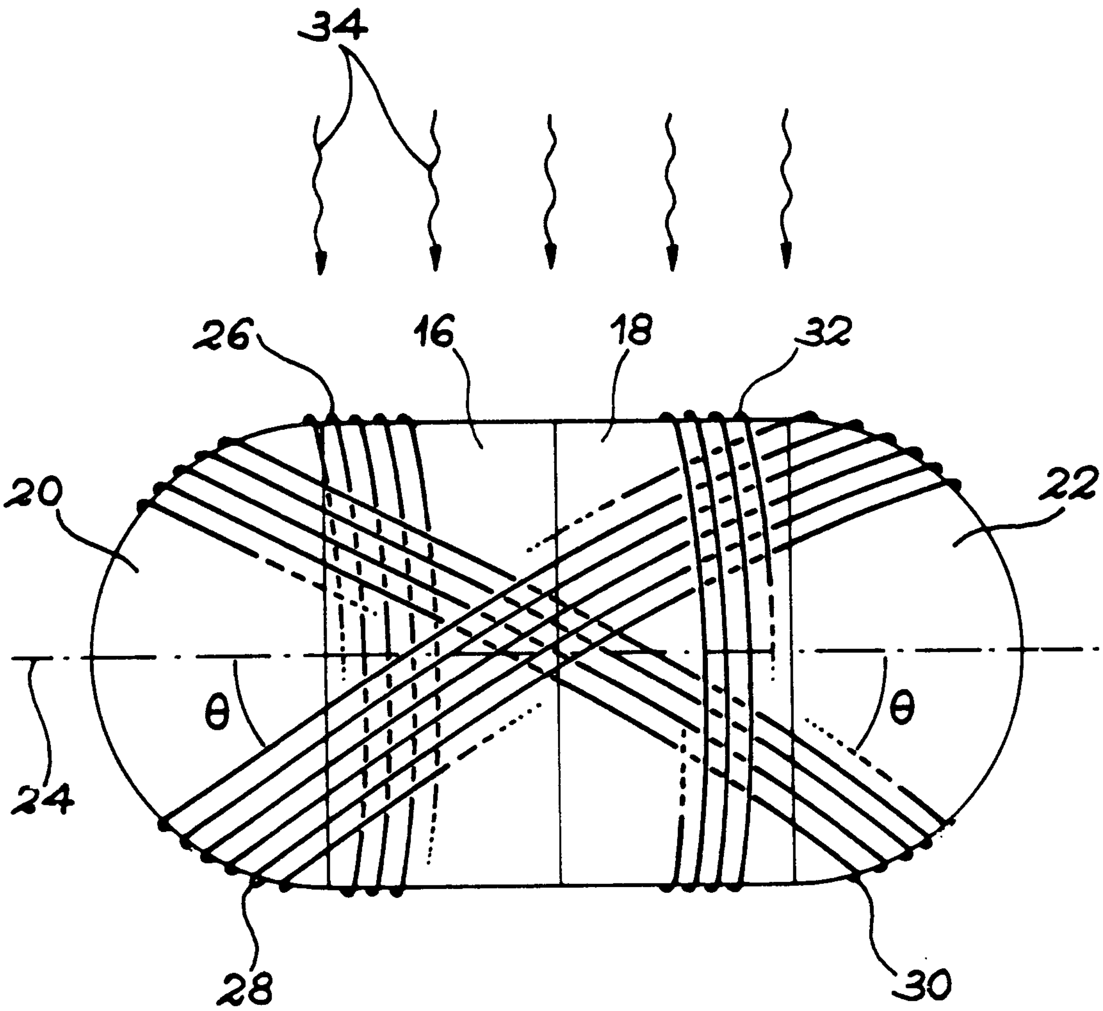
34
26
16
18
32
20
22
24
θ
θ
28
30

Office européen des brevets

# RAPPORT DE RECHERCHE EUROPEENNE

Numero de la demande

EP 92 40 0386

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2 427 346 (SOCIETE RHONE-POULENC INDUSTRIES ) | 1 | C08G73/12<br>C08F222/40 |
| A | US-A-4 568 733 (J.A. PARKER ET AL.) | 1 | |
| A | EP-A-0 206 383 (DSM RESINS BV) | 1 | |

| DOMAINES TECHNIQUES RECHERCHES (Int. Cl.5 ) |
|---|
| C08F |

Le présent rapport a été établi pour toutes les revendications

| Lieu de la recherche | Date d'achèvement de la recherche | Examinateur |
|---|---|---|
| LA HAYE | 12 MARS 1992 | GLIKMAN J.F.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)